# FASCICULE DE BREVET EUROPEEN

(11) **EP 3 565 794 B1**
(45) Date de publication et mention de la délivrance du brevet: **30.09.2020**
(21) Numéro de dépôt: 18702315.5
(22) Date de dépôt: 04.01.2018
(51) Int. Cl.: C04B 41/87, C04B 41/89, F01D 5/28

(54) **PIECE COMPRENANT UN SUBSTRAT ET UNE BARRIERE ENVIRONNEMENTALE**
TEIL MIT EINEM SUBSTRAT UND EINER UMWELTBARRIERE
PART COMPRISING A SUBSTRATE AND AN ENVIRONMENTAL BARRIER

(30) Priorité: 06.01.2017 FR 1750126
(43) Date de publication de la demande: 13.11.2019
(73) Titulaire: Safran Ceramics, 33185 Le Haillan (FR); Centre National de la Recherche Scientifique, 75016 Paris (FR); Université de Bordeaux, 33000 Bordeaux (FR)
(72) Inventeur: PIN, Lisa, 77550 Moissy-Crayamel (FR); ARNAL, Simon, 33000 Bordeaux (FR); REBILLAT, Francis, 33600 Pessac (FR); MAUVY, Fabrice, 33610 Canejan (FR)
(74) Mandataire: Cabinet Beau de Loménie
(86) Numéro de dépôt international: PCT/FR2018/050019
(87) Numéro de publication internationale: WO 2018/127664

(56) Documents cités:
- WO-A1-2014/150380

## Description

### Arrière-plan de l'invention

L'invention concerne la protection d'un substrat dont au moins une partie adjacente à une surface du substrat est en matériau contenant du silicium, lors d'une utilisation à haute température en milieu oxydant, par formation d'une barrière environnementale sur la surface du substrat.

Un domaine particulier d'application de l'invention est la protection de pièces en matériau composite à matrice céramique (CMC) formant des parties chaudes de turbines à gaz, telles que des parois de chambre de combustion, ou des anneaux de turbine, des distributeurs de turbine ou des aubes de turbines, pour des moteurs aéronautiques ou des turbines industrielles.

Pour de telles turbines à gaz, le souci d'améliorer le rendement et de réduire les émissions polluantes conduit à envisager des températures toujours plus élevées dans les chambres de combustion.

Il a donc été proposé de remplacer les matériaux métalliques par des matériaux CMC, notamment pour des parois de chambres de combustion ou anneaux de turbine. En effet, les matériaux CMC sont connus pour posséder à la fois de bonnes propriétés mécaniques permettant leur utilisation pour des éléments de structure et la capacité de conserver ces propriétés à des températures élevées. Les matériaux CMC comportent un renfort fibreux en fibres réfractaires, typiquement en carbone ou en céramique, qui est densifié par une matrice céramique, par exemple en SiC.

Dans les conditions de fonctionnement des turbines aéronautiques, c'est-à-dire à haute température sous atmosphère oxydante et humide, les matériaux CMC sont sensibles au phénomène de corrosion. La corrosion du CMC résulte de l'oxydation du SiC en silice qui, en présence de vapeur de d'eau, se volatilise sous forme d'hydroxydes de silicium Si(OH)₄. Les phénomènes de corrosion entraînent une récession du CMC et affectent la durée de vie de ce dernier. Afin de limiter cette dégradation en fonctionnement, il a été envisagé de former à la surface des matériaux CMC des revêtements de barrière environnementale. De tels revêtements peuvent comporter une couche de liaison en silicium ainsi qu'une couche de silicate de terre rare positionnée sur la couche de liaison. La couche de liaison permet, d'une part, d'améliorer l'accroche de la couche de silicate de terre rare et, d'autre part, de former une couche de silice protectrice, dont la faible perméabilité à l'oxygène participe à la protection du CMC contre l'oxydation. La couche de silicate de terre rare permet, quant à elle, de limiter la diffusion de la vapeur d'eau vers la couche de silice formée par oxydation du silicium et par conséquent de limiter la récession de celle-ci. De tels revêtements de barrière environnementale sont décrits dans WO 2014/150380. Toutefois, la couche de silicate de terre rare peut elle-même être sensible au phénomène de récession et se volatiliser en fonctionnement, affectant ainsi négativement la durée de vie du substrat revêtu. En outre, il est souhaitable d'améliorer l'effet barrière aux espèces oxydantes conféré par le revêtement de barrière environnementale.

Il existe donc un besoin pour disposer de nouvelles barrières environnementales conférant au matériau sous-jacent une durée de vie améliorée en fonctionnement.

### Objet et résumé de l'invention

A cet effet, l'invention propose, selon un premier aspect, une pièce comprenant un substrat, dont au moins une partie adjacente à une surface du substrat est en un matériau contenant du silicium, et une barrière environnementale formée sur la surface du substrat, la barrière environnementale comprenant au moins une première couche comprenant :
un disilicate de terre rare de formule RE^{a}₂Si₂O₇ présent en une teneur molaire comprise entre 70% et 99,9%, où RE^{a} est un élément terre rare, et
au moins un oxyde de terre rare de formule RE^{b}₂O₃ présent en une teneur molaire comprise entre 0,1% et 30%, où RE^{b} est un élément terre rare différent de RE^{a}.

La présence de l'oxyde de terre rare RE^{b}₂O₃ dans la première couche dans des proportions particulières permet avantageusement de conférer à la barrière environnementale un meilleur effet barrière vis-à-vis de la diffusion des espèces oxydantes ainsi qu'une tenue à la récession améliorée. Le fait que l'oxyde RE^{b}₂O₃ soit présent dans la première couche à raison d'au moins 0,1% en pourcentages molaires permet avantageusement d'améliorer l'effet barrière aux espèces oxydantes et la résistance à la récession. L'effet barrière aux espèces oxydantes peut toutefois être négativement affecté si la teneur molaire en oxyde RE^{b}₂O₃ dans la première couche est trop élevée, c'est pourquoi cette teneur en RE^{b}₂O₃ est limitée à au plus 30% en pourcentages molaires. Il est aussi à noter que la présence de l'oxyde de terre rare RE^{b}₂O₃ aux proportions indiquées permet de conférer à la première couche une tenue améliorée vis-à-vis des aluminosilicates de calcium et de magnésium (CMAS). En effet, l'oxyde de terre rare RE^{b}₂O₃ présente une réactivité supérieure vis-à-vis des CMAS en comparaison avec le silicate de terre rare et va donc réagir préférentiellement avec ces derniers formant des composés stables thermochimiquement et empêchant les CMAS de migrer davantage vers le substrat. L'invention fournit ainsi une barrière environnementale conférant, au substrat sous-jacent, une durée de vie améliorée à haute température en environnement oxydant et humide.

Dans un exemple de réalisation, RE^{b} est choisi parmi le terbium Tb, l'erbium Er, le dysprosium Dy, le gadolinium Gd, l'europium Eu, le lutécium Lu, le samarium Sm, l'yttrium Y et l'ytterbium Yb. En particulier, RE^{b} est choisi parmi le terbium Tb, l'erbium Er et le dysprosium Dy. Lorsque RE^{b} est l'yttrium Y, RE^{a} peut être l'ytterbium Yb. Lorsque RE^{b} est l'ytterbium Yb, RE^{a} peut être l'yttrium Y.

Dans un exemple de réalisation, le disilicate de terre rare de formule RE^{a}₂Si₂O₇ est présent, dans la première couche, en une teneur molaire comprise entre 80% et 95%, et ledit au moins un oxyde de terre rare de formule RE^{b}₂O₃ est présent, dans la première couche, en une teneur molaire comprise entre 5% et 20%.

Dans un exemple de réalisation, le disilicate de terre rare de formule RE^{a}₂Si₂O₇ est présent, dans la première couche, en une teneur molaire comprise entre 85% et 95%, et ledit au moins un oxyde de terre rare de formule RE^{b}₂O₃ est présent, dans la première couche, en une teneur molaire comprise entre 5% et 15%.

Dans un exemple de réalisation, RE^{a} est choisi parmi l'yttrium Y et l'ytterbium Yb.

Dans un exemple de réalisation, la barrière environnementale comprend en outre une seconde couche présente sur la première couche, la seconde couche comprenant au moins un monosilicate de terre rare de formule RE^{c}₂SiO₅, où RE^{c} est un élément terre rare.

La présence de la seconde couche à base du monosilicate RE^{c}₂SiO₅ permet avantageusement d'améliorer davantage encore la tenue de la barrière environnementale à la récession dans la mesure où les monosilicates de terre rare sont moins sensibles à ce phénomène que les disilicates de terre rare.

Dans un exemple de réalisation, la seconde couche comprend au moins :
le monosilicate de terre rare de formule RE^{c}₂SiO₅ en une teneur molaire comprise entre 85% et 99,9%, et
au moins un oxyde de terre rare de formule RE^{d}₂O₃ présent en une teneur molaire comprise entre 0,1% et 15%, où RE^{d} est un élément terre rare différent de RE^{c},

L'addition de l'oxyde de terre rare RE^{d}₂O₃ dans la seconde couche permet, comme décrit plus haut pour la première couche, de conférer à celle-ci une résistance à la récession et un effet barrière vis-à-vis des espèces oxydantes améliorés. Comme pour la première couche, la présence de l'oxyde de terre rare RE^{d}₂O₃ permet de conférer à la seconde couche une tenue améliorée vis-à-vis des aluminosilicates de calcium et de magnésium (CMAS).

Dans un exemple de réalisation, RE^{d} est choisi parmi le terbium Tb, l'erbium Er, le dysprosium Dy, le gadolinium Gd, l'europium Eu, le lutécium Lu, le samarium Sm, l'yttrium Y et l'ytterbium Yb. En particulier, RE^{d} est choisi parmi le terbium Tb, l'erbium Er et le dysprosium Dy. Lorsque RE^{d} est l'yttrium Y, RE^{c} peut être l'ytterbium Yb. Lorsque RE^{d} est l'ytterbium Yb, RE^{c} peut être l'yttrium Y.

Dans un exemple de réalisation, le monosilicate de terre rare de formule RE^{c}₂SiO₅ est présent, dans la seconde couche, en une teneur molaire comprise entre 85% et 95%, et ledit au moins un oxyde de terre rare de formule RE^{d}₂O₃ est présent, dans la seconde couche, en une teneur molaire comprise entre 5% et 15%.

Dans un exemple de réalisation, RE^{c} est choisi parmi l'yttrium Y et l'ytterbium Yb.

Dans un exemple de réalisation, RE^{a} est l'yttrium Y, RE^{c} est l'ytterbium Yb et RE^{b} et RE^{d} sont, indépendamment l'un de l'autre, choisis parmi le terbium Tb, l'erbium Er et le dysprosium Dy.

Dans un exemple de réalisation, la barrière environnementale comprend en outre une troisième couche présente entre la première couche et la seconde couche, la troisième couche comprenant :
- le disilicate de terre rare de formule RE^{a}₂Si₂O₇ en une teneur molaire égale à A.Ta, où Ta est la teneur molaire en RE^{a}₂Si₂O₇ dans la première couche,
- ledit au moins un oxyde de terre rare de formule RE^{b}₂O₃ en une teneur molaire égale à A.Tb, où Tb est la teneur molaire en RE^{b}₂O₃ dans la première couche, et
- le monosilicate de terre rare de formule RE^{c}₂SiO₅ en une teneur molaire égale à (1-A).Tc, où Tc est la teneur molaire en RE^{c}₂SiO₅ dans la seconde couche,

A désignant un coefficient de pondération strictement supérieur à 0 et strictement inférieur à 1.

Un tel exemple de réalisation concerne le cas où une troisième couche de composition mixte est intercalée entre la première couche et la seconde couche. Cet exemple est avantageux afin d'améliorer davantage encore la compatibilité entre la première couche et la seconde couche en termes de coefficient de dilatation thermique.

A peut par exemple être compris entre 0,25 et 0,75. La troisième couche peut en outre comprendre ledit au moins un oxyde de terre rare de formule RE^{d}₂O₃ en une teneur molaire égale à (1-A).Td où Td est la teneur molaire en RE^{d}₂O₃ dans la seconde couche.

Dans un exemple de réalisation, la barrière environnementale comprend, en plus de la troisième couche, une quatrième couche présente entre la troisième couche et la seconde couche, la quatrième couche comprenant :
- le disilicate de terre rare de formule RE^{a}₂Si₂O₇ en une teneur molaire égale à B.Ta,
- ledit au moins un oxyde de terre rare de formule RE^{b}₂O₃ en une teneur molaire égale à B.Tb,
- le monosilicate de terre rare de formule RE^{c}₂SiO₅ en une teneur molaire égale à (1-B).Tc, et
- optionnellement ledit au moins un oxyde de terre rare de formule RE^{d}₂O₃ en une teneur molaire égale à (1-B).Td,

B désignant un coefficient de pondération strictement supérieur à 0 et strictement inférieur à 1 et le coefficient B étant strictement inférieur au coefficient A.

Un tel exemple permet avantageusement d'améliorer davantage encore la compatibilité entre la première couche et la seconde couche en termes de coefficient de dilatation thermique.

Dans un exemple de réalisation, la barrière environnementale comprend en outre une couche d'accrochage comprenant du silicium présente entre la première couche et la surface du substrat.

La présente invention vise également un procédé de fabrication d'une pièce telle que décrite plus haut, le procédé comprenant au moins une étape de formation de la première couche de la barrière environnementale sur la surface du substrat.

Le procédé peut en outre comporter une étape de formation de la seconde couche de la barrière environnementale sur la première couche.

Le procédé peut en outre comporter une étape de formation de la troisième couche de la barrière environnementale sur la première couche avant formation de la seconde couche. Le procédé peut en outre comporter une étape de formation de la quatrième couche de la barrière environnementale sur la troisième couche avant formation de la seconde couche.

Le procédé peut en outre comporter, avant la formation de la première couche, une étape de formation de la couche d'accrochage sur la surface du substrat.

La présente invention vise également un procédé d'utilisation d'une pièce telle que décrite plus haut, le procédé comprenant au moins une étape d'utilisation de ladite pièce à une température supérieure ou égale à 800°C en milieu oxydant et humide.

### Brève description des dessins

D'autres caractéristiques et avantages de l'invention ressortiront de la description suivante, donnée à titre non limitatif, en référence aux dessins annexés, sur lesquels :
- la figure 1 illustre, de manière schématique, une pièce selon un premier mode de réalisation de l'invention,
- la figure 2 illustre, de manière schématique, une pièce selon un deuxième mode de réalisation de l'invention,
- la figure 3 illustre, de manière schématique, une pièce selon un troisième mode de réalisation de l'invention,
- la figure 4 est un ordinogramme montrant les étapes mises en œuvre pour fabriquer la pièce illustrée à la figure 3,
- la figure 5 est un résultat d'essai comparant l'effet barrière vis-à-vis de la diffusion des espèces oxydantes présenté par des premières couches utilisables dans le cadre de l'invention et par une couche de barrière environnementale de l'art antérieur, et
- la figure 6 est un résultat d'essai comparant la résistance à la récession d'une première couche utilisable dans le cadre de l'invention et d'une couche de barrière environnementale de l'art antérieur.

### Description détaillée de modes de réalisation

Dans la description détaillée qui suit, on envisage la formation d'une barrière environnementale sur un substrat en matériau CMC contenant du silicium. L'invention est toutefois applicable à des substrats en matériau réfractaire monolithique contenant du silicium et, plus généralement, à des substrats dont au moins une partie adjacente à une surface externe du substrat est en un matériau réfractaire (composite ou monolithique) contenant du silicium. Ainsi, l'invention vise notamment la protection de matériaux réfractaires constitués par des céramiques monolithiques, par exemple en carbure de silicium SiC ou nitrure de silicium Si₃N₄, mais plus particulièrement la protection de matériaux composites réfractaires tels que des matériaux composites à matrice céramique (CMC) contenant du silicium, par exemple des CMC à matrice au moins partiellement en SiC.

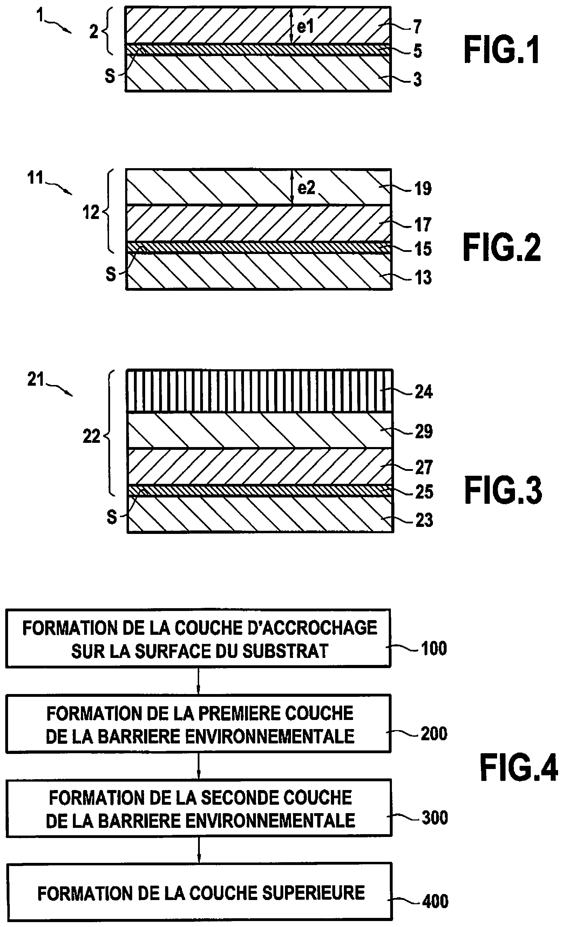

La figure 1 montre une pièce 1 formée d'un substrat 3 muni d'une barrière environnementale 2 selon un premier mode de réalisation de l'invention. La surface S du substrat 3 est formée d'un matériau réfractaire contenant du silicium.

Le substrat 3 en matériau CMC contenant du silicium comprend un renfort fibreux qui peut être en fibres de carbone (C) ou en fibres céramiques, par exemple en fibres de SiC ou formées essentiellement de SiC, incluant des fibres en Si-C-O ou Si-C-O-N, c'est-à-dire contenant aussi de l'oxygène et éventuellement de l'azote. De telles fibres sont produites par la société Nippon Carbon sous la référence « Nicalon » ou « Hi-Nicalon » ou « Hi-Nicalon Type-S », ou par la société Ube Industries sous la référence « Tyranno-ZMI ». Les fibres céramiques peuvent être revêtues d'une mince couche d'interphase en carbone pyrolytique (PyC), en nitrure de bore (BN) ou en carbone dopé au bore (BC, avec 5%at. à 20%at. de B, le complément étant C).

Le renfort fibreux est densifié par une matrice qui est formée, dans son intégralité ou au moins dans une phase externe de celle-ci, par un matériau contenant du silicium, tel qu'un composé du silicium, par exemple SiC ou un système ternaire Si-B-C. Par phase externe de matrice, on entend une phase de matrice formée en dernier, la plus éloignée des fibres du renfort. Ainsi, la matrice peut être formée de plusieurs phases de natures différentes, et peut par exemple être :
une matrice mixte C-SiC (le SiC étant du côté externe), ou
une matrice séquencée avec une alternance de phases SiC et de phases de matrice de moindre rigidité, par exemple en carbone pyrolytique (PyC), nitrure de bore (BN) ou carbone dopé au bore (BC), avec une phase terminale de matrice en SiC, ou
une matrice auto-cicatrisante avec des phases de matrice en carbure de bore (B₄C) ou en un système ternaire Si-B-C, éventuellement avec carbone libre (B₄C + C, Si-B-C + C), et avec une phase terminale Si-B-C ou SiC.

La matrice peut être au moins en partie formée par CVI de manière connue en soi. En variante, la matrice peut être au moins en partie formée par voie liquide (imprégnation par une résine précurseur de la matrice et transformation par réticulation et pyrolyse, le processus pouvant être répété) ou par infiltration de silicium à l'état fondu (procédé de « Melt-Infiltration »). Dans ce dernier cas, une poudre est introduite dans le renfort fibreux éventuellement partiellement densifié, cette poudre pouvant être une poudre de carbone et éventuellement de céramique, et une composition métallique à base de silicium à l'état fondu est ensuite infiltrée pour former une matrice de type SiC-Si.

La barrière environnementale 2 est formée sur toute la surface externe S du substrat 3 ou sur une partie seulement de cette surface S, par exemple lorsque seulement une partie de la surface S doit être protégée. Dans l'exemple illustré à la figure 1, la barrière environnementale 2 comprend une première couche 7 et une couche d'accrochage 5 présente entre le substrat 3 et la première couche 7. Dans l'exemple illustré, la couche d'accrochage 5 est présente au contact de la surface S du substrat 3. En outre, dans cet exemple, la première couche 7 est au contact de la couche d'accrochage 5.

La première couche 7 peut être sous la forme d'un système constitué de 70% molaire à au plus 99,9% molaire d'un disilicate de terre rare RE^{a}₂Si₂O₇ et de 0,1% molaire à au plus 30% molaire d'au moins un oxyde de terre rare RE^{b}₂O₃ où RE^{b} désigne un élément terre rare différent de l'élément terre rare RE^{a}. Ledit au moins un oxyde RE^{b}₂O₃ et le disilicate RE^{a}₂Si₂O₇ sont présents dans la première couche 7. Ledit au moins un oxyde RE^{b}₂O₃ peut être présent en tant que dopant dans la première couche 7.

Comme évoqué plus haut, la composition particulière de la première couche 7 confère notamment à celle-ci une conductivité ionique diminuée, rendant plus difficile la diffusion des espèces réactives oxydantes et corrosives ainsi qu'une résistance accrue au phénomène de récession.

La première couche 7 peut comprendre un disilicate de formule RE^{a}₂Si₂O₇ présent, dans la première couche 7, en une teneur molaire comprise entre 70% et 99,9% et un unique oxyde RE^{b}₂O₃ présent, dans la première couche 7, en une teneur molaire comprise entre 0,1% et 30%. En variante, la première couche 7 peut comprendre (i) un disilicate de terre rare de formule RE^{a}₂Si₂O₇ présent, dans la première couche 7, en une teneur molaire comprise entre 70% et 99,9%, et (ii) plusieurs oxydes de terre rare comprenant chacun un élément terre rare différent et étant chacun de formule RE^{b}₂O₃, la teneur molaire totale en oxydes de formule RE^{b}₂O₃ dans la première couche étant comprise entre 0,1% et 30% et chaque RE^{b} étant différent du RE^{a}.

La teneur molaire en oxyde(s) de terre rare RE^{b}₂O₃ dans la première couche 7 peut être comprise entre 5% et 20%. La première couche 7 peut, dans certains modes de réalisation, être sous la forme d'un système constitué de 80% molaire à au plus 95% molaire du disilicate de terre rare RE^{a}₂Si₂O₇ et de 5% molaire à au plus 20% molaire dudit au moins un oxyde de terre rare RE^{b}₂O₃. En particulier, la première couche 7 peut, dans certains modes de réalisation, être sous la forme d'un système constitué de 87% molaire à au plus 93% molaire du disilicate de terre rare RE^{a}₂Si₂O₇ et de 7% molaire à au plus 13% molaire dudit au moins un oxyde de terre rare RE^{b}₂O₃.

En particulier et aux inévitables impuretés près, la première couche 7 comprend uniquement le disilicate de terre rare RE^{a}₂Si₂O₇ et ledit au moins un oxyde de terre rare RE^{b}₂O₃. La première couche 7 peut en particulier être dépourvue d'aluminium, en particulier d'alumine. La première couche 7 peut en particulier être dépourvue de métal alcalin ou de métal alcalino-terreux.

RE^{a} est un élément terre rare choisi parmi l'yttrium Y, le scandium Sc et les lanthanides. En particulier, RE^{a} est choisi parmi l'yttrium Y et l'ytterbium Yb. RE^{b} est un élément terre rare choisi parmi l'yttrium Y, le scandium Sc et les lanthanides et RE^{b} est différent de RE^{a}. En particulier, RE^{b} est choisi parmi le terbium Tb, l'erbium Er et le dysprosium Dy.

L'épaisseur e₁ de la première couche 7 peut par exemple être comprise entre 50µm et 1,5mm.

La couche d'accrochage 5 comprend du silicium et peut par exemple être en silicium ou en mullite (3Al₂O₃.2SiO₂). La couche d'accrochage 5 peut de manière connue en soi former une couche protectrice passivante de silice en fonctionnement (« Thermally Grown Oxide »).

On a représenté, en lien avec la figure 2, une pièce 11 selon un deuxième mode de réalisation selon l'invention. Selon cet exemple, la pièce 11 comprend un substrat 13 à la surface S duquel est présent une barrière environnementale 12. Le substrat 13 peut présenter les mêmes caractéristiques que le substrat 3 décrit plus haut. La barrière environnementale 12 comprend une couche d'accrochage 15 qui peut présenter les mêmes caractéristiques que la couche d'accrochage 5 décrite plus haut et une première couche 17, présente sur la couche d'accrochage 15, qui peut présenter les mêmes caractéristiques que la première couche 7 décrite plus haut.

Dans l'exemple selon la figure 2, la barrière environnementale 12 comprend en outre une seconde couche 19 qui comprend au moins un monosilicate de terre rare RE^{c}₂SiO₅ où RE^{c} désigne un élément terre rare.

Comme évoqué plus haut, la présence de la seconde couche permet avantageusement d'améliorer davantage encore la tenue de la barrière environnementale à la récession.

En particulier, la seconde couche 19 peut être sous la forme d'un système constitué de 85% molaire à au plus 99,9% molaire du monosilicate de terre rare RE^{c}₂SiO₅ et de 0,1% molaire à au plus 15% molaire d'au moins un oxyde de terre rare RE^{d}₂O₃ où RE^{d} désigne un élément terre rare différent de l'élément terre rare RE^{c}. Ledit au moins un oxyde RE^{d}₂O₃ et le monosilicate RE^{c}₂SiO₅ sont présents dans la seconde couche 19. Ledit au moins un oxyde RE^{d}₂O₃ peut être présent en tant que dopant dans la seconde couche 19.

Comme évoqué plus haut, une telle seconde couche présente une meilleure résistance à la récession ainsi qu'un effet barrière amélioré vis-à-vis des espèces réactives et des CMAS.

La seconde couche 19 peut comprendre un monosilicate RE^{c}₂SiO₅ présent, dans la seconde couche 19, en une teneur molaire comprise entre 85% et 99,9% et un unique oxyde RE^{d}₂O₃ présent, dans la seconde couche 19, en une teneur molaire comprise entre 0,1% et 15%. En variante, la seconde couche 19 peut comprendre (i) un monosilicate de terre rare de formule RE^{c}₂SiO₅ présent, dans la seconde couche 19, en une teneur molaire comprise entre 85% et 99,9%, et (ii) plusieurs oxydes de terre rare comprenant chacun un élément terre rare différent et étant chacun de formule RE^{d}₂O₃, la teneur molaire totale en oxydes de formule RE^{d}₂O₃ dans la seconde couche étant comprise entre 0,1% et 15% et chaque RE^{d} étant différent du RE^{c}.

Ledit au moins un oxyde de terre rare RE^{b}₂O₃ peut être présent dans la première couche 17 en une première teneur molaire et ledit au moins un oxyde de terre rare RE^{d}₂O₃ peut être présent dans la seconde couche 19 en une seconde teneur molaire laquelle peut être inférieure à la première teneur molaire. Une telle caractéristique permet d'améliorer davantage encore la compatibilité entre la première et la seconde couches en termes de coefficient de dilatation thermique. La teneur molaire en oxyde(s) de terre rare RE^{d}₂O₃ dans la seconde couche 19 peut être comprise entre 5% et 15%. La seconde couche 19 peut, dans certains modes de réalisation, être sous la forme d'un système constitué de 85% molaire à au plus 95% molaire du monosilicate de terre rare RE^{c}₂SiO₅ et de 5% molaire à au plus 15% molaire dudit au moins un oxyde de terre rare RE^{d}₂O₃. En particulier, la seconde couche 19 peut, dans certains modes de réalisation, être sous la forme d'un système constitué de 87% molaire à au plus 93% molaire du monosilicate de terre rare RE^{c}₂SiO₅ et de 7% molaire à au plus 13% molaire dudit au moins un oxyde de terre rare RE^{d}₂O₃.

En particulier et aux inévitables impuretés près, la seconde couche 19 comprend uniquement le monosilicate de terre rare RE^{c}₂SiO₅ et ledit au moins un oxyde de terre rare RE^{d}₂O₃. La seconde couche 19 peut en particulier être dépourvue d'aluminium, en particulier d'alumine. La seconde couche 19 peut en particulier être dépourvue de métal alcalin ou de métal alcalino-terreux.

RE^{c} est un élément terre rare choisi parmi l'yttrium Y, le scandium Sc et les lanthanides. En particulier, RE^{c} est choisi parmi l'yttrium Y et l'ytterbium Yb. RE^{d} est un élément terre rare choisi parmi l'yttrium Y, le scandium Sc et les lanthanides et RE^{d} est différent de RE^{c}. En particulier, RE^{d} est choisi parmi le terbium Tb, l'erbium Er et le dysprosium Dy. RE^{c} peut être identique ou différent de RE^{a}. En particulier, RE^{c} est l'ytterbium Yb et RE^{a} l'yttrium Y. RE^{d} peut être identique ou différent de RE^{b}.

L'épaisseur e₂ de la seconde couche 19 peut par exemple être comprise entre 50µm et 500µm.

On a représenté à la figure 2 un mode de réalisation où une seconde couche 19 comprenant un monosilicate de terre rare est présente sur la première couche 17 comprenant le disilicate de terre rare. On pourrait en variante positionner, à la place de la seconde couche 19, une couche additionnelle sur la première couche 17, cette couche additionnelle comprenant un disilicate de terre rare RE^{e}₂Si₂O₇ et au moins un oxyde de terre rare RE^{f}₂O₃ dans les mêmes fourchettes de teneurs molaires que pour la première couche et où RE^{f} est un élément terre rare différent de l'élément terre rare RE^{e}. Dans ce cas, RE^{e} peut être identique ou différent de RE^{a}. On peut par exemple avoir RE^{e} = Yb et RE^{a} = Y. En outre dans ce cas, RE^{f} peut être identique ou différent de RE^{b}.

Par ailleurs, dans l'exemple de la figure 2, la seconde couche 19 est au contact de la première couche 17. On pourrait en variante disposer une troisième couche, et éventuellement une quatrième couche, telles que décrites plus haut entre la première couche 17 et la seconde couche 19.

Dans le mode de réalisation de la figure 3, la pièce 21 comprend un substrat 23, une couche d'accrochage 25, une première couche 27 et une seconde couche 29. Le substrat 23, la couche d'accrochage 25, la première couche 27 et la seconde couche 29 peuvent être tels que décrits plus haut. La barrière environnementale 22 comprend en outre une couche supérieure 24 présente sur la seconde couche 29. Cette couche supérieure 24 est, dans l'exemple illustré, une couche céramique de barrière thermique présentant une structure poreuse. La couche supérieure 24 peut-être en silicate de terre rare. On pourrait en variante former une couche supérieure qui constituerait un revêtement abradable, par exemple dans le cas de pièces en CMC formant des anneaux de turbine. La couche supérieure pourrait encore constituer un revêtement de protection contre les CMAS. Le dépôt de la couche supérieure 24 permet de fonctionnaliser davantage la barrière environnementale. On pourrait en variante avoir une pièce, dépourvue de la couche supérieure 24, dans laquelle la première ou la seconde couche présenterait, en outre, une fonction de barrière thermique, de protection contre les CMAS ou constituerait un revêtement abradable.

La figure 4 illustre les différentes étapes mises en œuvre pour fabriquer la pièce 21 illustrée à la figure 3.

Dans un premier temps, la couche d'accrochage 25 peut être formée, de manière connue en soi, sur le substrat 23 par projection thermique à partir d'une poudre ou d'un mélange de poudres ayant la composition désirée (étape 100).

La première couche 27 peut être formée sur la couche d'accrochage 25 par projection thermique à partir d'un mélange de poudres solides de RE^{a}₂Si₂O₇ et d'oxyde(s) de terre rare RE^{b}₂O₃ dans les proportions désirées (étape 200). De manière similaire, la seconde couche 29 peut être formée sur la première couche 27 par projection thermique à partir d'un mélange de poudres solides de RE^{c}₂SiO₅ et d'oxyde(s) de terre rare RE^{d}₂O₃ dans les proportions désirées (étape 300). Les première et seconde couches 27 et 29 pourraient en variante être formées par d'autres procédés comme des procédés issus de la voie liquide par exemple par enduction par trempage (« dip-coating »), revêtement par pulvérisation (« spray-coating »), électrophorèse ou par voie sol-gel.

La couche supérieure 24 de barrière thermique peut être formée, de manière connue en soi, par projection thermique (étape 400).

Une fois fabriquée, la pièce peut être utilisée à une température supérieure ou égale à 800°C dans une atmosphère oxydante et humide. On peut, en particulier, l'utiliser à une température comprise entre 800°C et 1500°C, voire entre 800°C et 1300°C. La pièce peut, en particulier, être utilisée sous air humide.

La pièce ainsi fabriquée peut être une pièce pour application aéronautique ou aérospatiale. La pièce peut être une pièce de partie chaude d'une turbine à gaz d'un moteur aéronautique ou aérospatial ou d'une turbine industrielle. La pièce peut être une pièce de turbomachine. La pièce peut constituer une partie au moins d'un distributeur, une partie au moins d'une tuyère ou d'un revêtement de protection thermique, une paroi d'une chambre de combustion, un secteur d'anneau de turbine ou une aube de turbomachine.

### Exemple

Trois exemples de premières couches selon l'invention ont été fabriqués. Les trois premières couches fabriquées avaient les compositions suivantes :
- disilicate d'yttrium à raison de 95% molaire et oxyde d'erbium Er₂O₃ à raison de 5% molaire, cette couche est notée « DSY + 5%at Er₂O₃ »,
- disilicate d'yttrium à raison de 90% molaire et oxyde d'erbium Er₂O₃ à raison de 10% molaire, cette couche est notée « DSY + 10%at Er₂O₃ », et
- disilicate d'yttrium à raison de 85% molaire et oxyde d'erbium Er₂O₃ à raison de 15% molaire, cette couche est notée « DSY + 15%at Er₂O₃ ».

Une couche de barrière environnementale de l'art antérieur constituée uniquement de disilicate d'yttrium a été fabriquée. Cette couche est notée « couche DSY ».

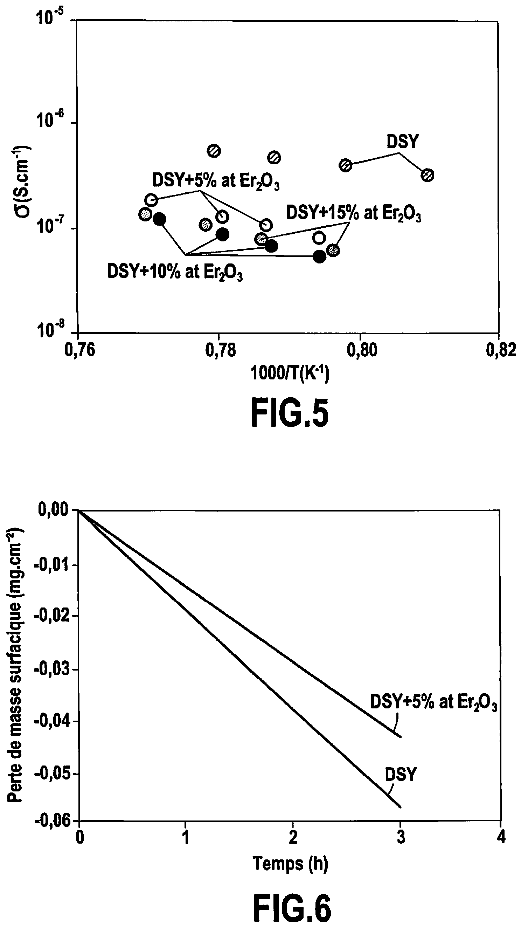

La figure 5 est un résultat d'essai comparant l'effet barrière vis-à-vis des espèces oxydantes conféré par chacune de ces trois premières couches avec l'effet barrière vis-à-vis de ces mêmes espèces conféré par la couche DSY. La figure 5 montre que la conductivité des espèces oxydantes dans chacune des premières couches est significativement inférieure à la conductivité de ces mêmes espèces dans la couche DSY. Cet essai a été réalisé à différentes températures comprises dans la plage 950°C-1050°C. Les mesures de conductivité ionique ont été réalisées par spectroscopie d'impédance complexe sous air ambiant entre 950°C et 1050°C.

La figure 6 est un résultat d'essai de corrosion et montre que la première couche selon l'invention présente une résistance à la récession supérieure à celle présentée par une couche formée uniquement de disilicate d'yttrium. Les mesures de récession ont été déterminées à partir d'essais de corrosion réalisés dans un four de corrosion à 1400°C sous 50kPa de H₂O et 50kPa d'air avec des vitesses de gaz de 5cm/s dans la zone froide du four.

L'expression « compris(e) entre ... et ... » doit se comprendre comme incluant les bornes.

## Revendications

1. Pièce (1 ; 11 ; 21) comprenant un substrat (3 ; 13 ; 23), dont au moins une partie adjacente à une surface (S) du substrat est en un matériau contenant du silicium, et une barrière environnementale (2 ; 12 ; 22) formée sur la surface du substrat, la barrière environnementale comprenant au moins une première couche (7 ; 17 ; 27) comprenant :
un disilicate de terre rare de formule RE^{a}₂Si₂O₇ présent en une teneur molaire comprise entre 70% et 99,9%, où RE^{a} est un élément terre rare, et
au moins un oxyde de terre rare de formule RE^{b}₂O₃ présent en une teneur molaire comprise entre 0,1% et 30%, où RE^{b} est un élément terre rare différent de RE^{a}.

2. Pièce (1 ; 11 ; 21) selon la revendication 1, dans laquelle RE^{b} est choisi parmi le terbium Tb, l'erbium Er, le dysprosium Dy, le gadolinium Gd, l'europium Eu, le lutécium Lu, le samarium Sm, l'yttrium Y et l'ytterbium Yb.

3. Pièce (1 ; 11 ; 21) selon la revendication 2, dans laquelle RE^{b} est choisi parmi le terbium Tb, l'erbium Er et le dysprosium Dy.

4. Pièce (1 ; 11 ; 21) selon l'une quelconque des revendications 1 à 3, dans laquelle le disilicate de terre rare de formule RE^{a}₂Si₂O₇ est présent, dans la première couche (7 ; 17 ; 27), en une teneur molaire comprise entre 80% et 95%, et dans laquelle ledit au moins un oxyde de terre rare de formule RE^{b}₂O₃ est présent, dans la première couche (7 ; 17 ; 27), en une teneur molaire comprise entre 5% et 20%.

5. Pièce (1 ; 11 ; 21) selon l'une quelconque des revendications 1 à 4, dans laquelle RE^{a} est choisi parmi l'yttrium Y et l'ytterbium Yb.

6. Pièce (11 ; 21) selon l'une quelconque des revendications 1 à 5, dans laquelle la barrière environnementale (12 ; 22) comprend en outre une seconde couche (19 ; 29) présente sur la première couche (17 ; 27), la seconde couche (19 ; 29) comprenant au moins un monosilicate de terre rare de formule RE^{c}₂SiO₅, où RE^{c} est un élément terre rare.

7. Pièce (11 ; 21) selon la revendication 6, dans laquelle la seconde couche (19 ; 29) comprend au moins :
le monosilicate de terre rare de formule RE^{c}₂SiO₅ en une teneur molaire comprise entre 85% et 99,9%, et
au moins un oxyde de terre rare de formule RE^{d}₂O₃ présent en une teneur molaire comprise entre 0,1% et 15%, où RE^{d} est un élément terre rare différent de RE^{c}.

8. Pièce (11 ; 21) selon la revendication 7, dans laquelle RE^{d} est choisi parmi le terbium Tb, l'erbium Er, le dysprosium Dy, le gadolinium Gd, l'europium Eu, le lutécium Lu, le samarium Sm, l'yttrium Y et l'ytterbium Yb.

9. Pièce (11 ; 21) selon la revendication 8, dans laquelle RE^{d} est choisi parmi le terbium Tb, l'erbium Er et le dysprosium Dy.

10. Pièce (11 ; 21) selon l'une quelconque des revendications 7 à 9, dans laquelle le monosilicate de terre rare de formule RE^{c}2SiO₅ est présent, dans la seconde couche (19 ; 29), en une teneur molaire comprise entre 85% et 95%, et dans laquelle ledit au moins un oxyde de terre rare de formule RE^{d}₂O₃ est présent, dans la seconde couche (19 ; 29), en une teneur molaire comprise entre 5% et 15%.

11. Pièce (11 ; 21) selon l'une quelconque des revendications 6 à 10, dans laquelle RE^{c} est choisi parmi l'yttrium Y et l'ytterbium Yb.

12. Pièce (11 ; 21) selon l'une quelconque des revendications 7 à 11, dans laquelle RE^{a} est l'yttrium Y, RE^{c} est l'ytterbium Yb et RE^{b} et RE^{d} sont, indépendamment l'un de l'autre, choisis parmi le terbium Tb, l'erbium Er et le dysprosium Dy.

13. Pièce selon l'une quelconque des revendications 6 à 12, dans laquelle la barrière environnementale comprend en outre une troisième couche présente entre la première couche et la seconde couche, la troisième couche comprenant :
- le disilicate de terre rare de formule RE^{a}₂Si₂O₇ en une teneur molaire égale à A.Ta, où Ta est la teneur molaire en RE^{a}₂Si₂O₇ dans la première couche,
- ledit au moins un oxyde de terre rare de formule RE^{b}₂O₃ en une teneur molaire égale à A.Tb, où Tb est la teneur molaire en RE^{b}₂O₃ dans la première couche, et
- le monosilicate de terre rare de formule RE^{c}₂SiO₅ en une teneur molaire égale à (1-A).Tc, où Tc est la teneur molaire en RE^{c}₂SiO₅ dans la seconde couche,
A désignant un coefficient de pondération strictement supérieur à 0 et strictement inférieur à 1.

14. Procédé de fabrication d'une pièce (1 ; 11 ; 21) selon l'une quelconque des revendications 1 à 13, le procédé comprenant au moins une étape de formation de la première couche (7 ; 17 ; 27) de la barrière environnementale (2 ; 12 ; 22) sur la surface (S) du substrat (3 ; 13 ; 23).

15. Procédé d'utilisation d'une pièce (1 ; 11 ; 21) selon l'une quelconque des revendications 1 à 13, le procédé comprenant au moins une étape d'utilisation de ladite pièce (1 ; 11 ; 21) à une température supérieure ou égale à 800°C en milieu oxydant et humide.

## Patentansprüche

1. Teil (1; 11; 21), umfassend ein Substrat (3; 13; 23), von dem mindestens ein Abschnitt angrenzend an eine Fläche (S) des Substrats aus einem Material besteht, das Silicium enthält, und eine Umweltbarriere (2; 12; 22), die auf der Fläche des Substrats gebildet ist, wobei die Umweltbarriere mindestens eine erste Schicht (7; 17; 27) umfasst, umfassend:
ein Seltenerddisilikat mit der Formel RE^{a}₂Si₂O₇, das in einem Molgehalt zwischen 70 % und 99,9 % vorhanden ist, wobei RE^{a} ein Seltenerdelement ist, und
mindestens ein Seltenerdoxid mit der Formel RE^{b}₂O₃, das in einem Molgehalt zwischen 0,1 % und 30 % vorhanden ist, wobei RE^{b} ein anderes Seltenerdelement als RE^{a} ist.

2. Teil (1; 11; 21) gemäß Anspruch 1, wobei RE^{b} ausgewählt ist aus Terbium Tb, Erbium Er, Dysprosium Dy, Gadolinium Gd, Europium Eu, Lutecium Lu, Samarium Sm, Yttrium Y und Ytterbium Yb.

3. Teil (1; 11; 21) gemäß Anspruch 2, wobei RE^{b} ausgewählt ist aus Terbium Tb, Erbium Er und Dysprosium Dy.

4. Teil (1; 11; 21) gemäß einem der Ansprüche 1 bis 3, wobei das Seltenerddisilikat mit der Formel RE^{a}₂Si₂O₇ in der ersten Schicht (7; 17; 27) in einem Molgehalt zwischen 80 % und 95 % vorhanden ist, und wobei das genannte mindestens eine Seltenerdoxid mit der Formel REb₂O₃ in der ersten Schicht (7; 17; 27) in einem Molgehalt zwischen 5 % und 20 % vorhanden ist.

5. Teil (1; 11; 21) gemäß einem der Ansprüche 1 bis 4, wobei RE^{a} ausgewählt ist aus Yttrium Y und Ytterbium Yb.

6. Teil (11; 21) gemäß einem der Ansprüche 1 bis 5, wobei die Umweltbarriere (12; 22) außerdem eine zweite Schicht (19; 29) umfasst, die auf der ersten Schicht (17; 27) vorhanden ist, wobei die zweite Schicht (19; 29) mindestens ein Seltenerdmonosilikat mit der Formel RE^{c}2SiO₅ umfasst, wobei RE^{c} ein Seltenerdelement ist.

7. Teil (11; 21) gemäß Anspruch 6, wobei die zweite Schicht (19; 29) mindestens umfasst:
das Seltenerdmonosilikat mit der Formel RE^{c}₂SiO₅ in einem Molgehalt zwischen 85 % und 99,9 %, und
mindestens ein Seltenerdoxid mit der Formel RE^{d}₂O₃, das in einem Molgehalt zwischen 0,1 % und 15 % vorhanden ist, wobei RE^{d} ein anderes Seltenerdelement ist als RE^{c}.

8. Teil (11; 21) gemäß Anspruch 7, wobei RE^{d} ausgewählt ist aus Terbium Tb, Erbium Er, Dysprosium Dy, Gadolinium Gd, Europium Eu, Lutecium Lu, Samarium Sm, Yttrium Y und Ytterbium Yb.

9. Teil (11; 21) gemäß Anspruch 8, wobei RE^{d} ausgewählt ist aus Terbium Tb, Erbium Er und Dysprosium Dy.

10. Teil (11; 21) gemäß einem der Ansprüche 7 bis 9, wobei das Seltenerdmonosilikat mit der Formel RE^{c}₂SiO₅ in der zweiten Schicht (19; 29) in einem Molgehalt zwischen 85 % und 95 % vorhanden ist, und wobei das genannte mindestens eine Seltenerdoxid mit der Formel RE^{d}₂O₃ in der zweiten Schicht (19; 29) in einem Molgehalt zwischen 5 % und 15 % vorhanden ist.

11. Teil (11; 21) gemäß einem der Ansprüche 6 bis 10, wobei RE^{c} ausgewählt ist aus Yttrium Y und Ytterbium Yb.

12. Teil (11; 21) gemäß einem der Ansprüche 7 bis 11, wobei RE^{a} Yttrium Y ist, RE^{c} Ytterbium Yb ist, und RE^{b} und RE^{d} unabhängig voneinander ausgewählt sind aus Terbium Tb, Erbium Er und Dysprosium Dy.

13. Teil gemäß einem der Ansprüche 6 bis 12, wobei die Umweltbarriere außerdem eine dritte Schicht umfasst, die zwischen der ersten Schicht und der zweiten Schicht vorhanden ist, wobei die dritte Schicht umfasst:
- das Seltenerddisilikat mit der Formel RE^{a}₂Si₂O₇ in einem Molgehalt gleich A.Ta, wobei Ta der Molgehalt von RE^{a}₂Si₂O₇ in der ersten Schicht ist,
- das genannte mindestens eine Seltenerdoxid mit der Formel RE^{b}₂O₃ in einem Molgehalt gleich A.Tb, wobei Tb der Molgehalt von RE^{b}₂O₃ in der zweiten Schicht ist, und
- das Seltenerdmonosilikat mit der Formel RE^{c}₂SiO₅ in einem Molgehalt gleich (1-A).Tc, wobei Tc der Molgehalt von RE^{c}₂SiO₇ in der zweiten Schicht ist,
wobei A einen Gewichtungskoeffizienten streng größer als 0 und streng kleiner als 1 bezeichnet.

14. Verfahren zur Herstellung eines Teils (1; 11; 21) gemäß einem der Ansprüche 1 bis 13, wobei das Verfahren mindestens einen Schritt des Bildens der ersten Schicht (7; 17; 27) der Umweltbarriere (2; 12; 22) auf der Fläche (S) des Substrats (3; 13; 23) umfasst.

15. Verfahren zur Verwendung eines Teils (1; 11; 21) gemäß einem der Ansprüche 1 bis 13, wobei das Verfahren mindestens einen Schritt des Verwendens des genannten Teils (1; 11; 21) bei einer Temperatur größer oder gleich 800 °C in einer oxidierenden und feuchten Umgebung umfasst.

## Claims

1. A part (1; 11; 21) comprising a substrate (3; 13; 23), having, adjacent to a surface (S) of the substrate, at least a portion that is made from a material that contains silicon, and an environmental barrier (2; 12; 22) formed on the surface of the substrate, the environmental barrier comprising at least a first layer (7; 17; 27) comprising:
- a rare earth disilicate of formula RE^{a}₂Si₂O₇ present at a molar content lying in the range 70% to 99.9%, where RE^{a} is a rare earth element; and
- at least one rare earth oxide of formula RE^{b}₂O₃ present at a molar content lying in the range 0.1% to 30%, where RE^{b} is a rare earth element different from RE^{a}.

2. A part (1; 11; 21) according to claim 1, wherein RE^{b} is selected from terbium Tb, erbium Er, dysprosium Dy, gadolinium Gd, europium Eu, lutetium Lu, samarium Sm, yttrium Y, and ytterbium Yb.

3. A part (1; 11; 21) according to claim 2, wherein RE^{b} is selected from terbium Tb, erbium Er, and dysprosium Dy.

4. A part (1; 11; 21) according to any one of claims 1 to 3, wherein the rare earth disilicate of formula RE^{a}₂Si₂O₇ is present in the first layer (7; 17; 27) at a molar content lying in the range 80% to 95%, and wherein said at least one rare earth oxide of formula RE^{b}₂O₃ is present in the first layer (7; 17; 27) at a molar content lying in the range 5% to 20%.

5. A part (1; 11; 21) according to any one of claims 1 to 4, wherein RE^{a} is selected from yttrium Y and ytterbium Yb.

6. A part (11; 21) according to any one of claims 1 to 5, wherein the environmental barrier (12; 22) further comprises a second layer (19; 29) present on the first layer (17; 27), the second layer (19; 29) comprising at least one rare earth monosilicate of formula RE^{c}₂SiO₅, where RE^{c} is a rare earth element.

7. A part (11; 21) according to claim 6, wherein the second layer (19; 29) comprises at least:
- the rare earth monosilicate of formula RE^{c}₂SiO₅ at a molar content lying in the range 85% to 99.9%; and
- at least one rare earth oxide of formula RE^{d}₂O₃ present at a molar content lying in the range 0.1% to 15%, where RE^{d} is a rare earth element different from RE^{c}.

8. A part (11; 21) according to claim 7, wherein RE^{d} is selected from terbium Tb, erbium Er, dysprosium Dy, gadolinium Gd, europium Eu, lutetium Lu, samarium Sm, yttrium Y, and ytterbium Yb.

9. A part (11; 21) according to claim 8, wherein RE^{d} is selected from terbium Tb, erbium Er, and dysprosium Dy.

10. A part (11; 21) according to any one of claims 7 to 9, wherein the rare earth monosilicate of formula RE^{c}₂SiO₅ is present in the second layer (19; 29) at a molar content lying in the range 85% to 95%, and wherein said at least one rare earth oxide of formula RE^{d}₂O₃ is present in the second layer (19; 29) at a molar content lying in the range 5% to 15%.

11. A part (11; 21) according to any one of claims 6 to 10, wherein RE^{c} is selected from yttrium Y and ytterbium Yb.

12. A part (11; 21) according to any one of claims 7 to 11, wherein RE^{a} is yttrium Y, RE^{c} is ytterbium Yb, and RE^{b} and RE^{d} are independent of each other, and selected from terbium Tb, erbium Er, and dysprosium Dy.

13. A part according to any one of claims 6 to 12, wherein the environmental barrier further comprises a third layer present between the first layer and the second layer, the third layer comprising:
- the rare earth disilicate of formula RE^{a}₂Si₂O₇ at a molar content equal to A.Ta, where Ta is the molar content of RE^{a}₂Si₂O₇ in the first layer;
- said at least one rare earth oxide of formula RE^{b}₂O₃ at a molar content equal to A.Tb, where Tb is the molar content of RE^{b}₂O₃ in the first layer; and
- the rare earth monosilicate of formula RE^{c}₂SiO₅ at a molar content equal to (1-A).Tc, where Tc is the molar content of RE^{c}₂SiO₅ in the second layer;
where A designates a weighting coefficient that is strictly greater than 0 and strictly less than 1.

14. A method of fabricating a part (1; 11; 21) according to any one of claims 1 to 13, the method comprising at least a step of forming the first layer (7; 17; 27) of the environmental barrier (2; 12; 22) on the surface (S) of the substrate (3; 13; 23).

15. A method of using a part (1; 11; 21) according to any one of claims 1 to 13, the method comprising at least a step of using said part (1; 11; 21) at a temperature higher than or equal to 800°C in a medium that is oxidizing and wet.
